Europäisches Patentamt

European Patent Office

Office européen des brevets

(19)

(11) Veröffentlichungsnummer: **0 156 181 B1**

(12) **EUROPÄISCHE PATENTSCHRIFT**

(45) Veröffentlichungstag der Patentschrift:
24.05.89

(21) Anmeldenummer: 85102260.8

(22) Anmeldetag: 28.02.85

(51) Int. Cl.⁴: **G 01 S 17/02**, G 01 S 7/48,
F 41 G 3/06

(54) Optisches System zum gleichzeitigen Empfang von Wärme- und Laserstrahlung.

(30) Priorität: 05.03.84 DE 3408082
21.02.85 DE 3506088

(43) Veröffentlichungstag der Anmeldung:
02.10.85 Patentblatt 85/40

(45) Bekanntmachung des Hinweises auf die Patenterteilung:
24.05.89 Patentblatt 89/21

(84) Benannte Vertragsstaaten:
AT BE CH DE FR GB IT LI LU NL SE

(56) Entgegenhaltungen:
EP-A- 0 035 101
EP-A- 0 117 983
DE-A- 3 104 318
DE-C- 3 048 809
US-A- 3 912 927

(73) Patentinhaber: Siemens Aktiengesellschaft Berlin und München, Wittelsbacherplatz 2, D-8000 München 2 (DE)

(72) Erfinder: Grage, Ludger, Dipl.-Ing., Frühlingstrasse 46, D-8031 Eichenau (DE)

ACTORUM AG

## Beschreibung

Die Erfindung betrifft ein optisches System der im Oberbegriff des Anspruchs 1 genannten Art. Ein solches System ist aus DE-PS 3 048 809 bekannt.

Für Ortungs- und Zielverfahren werden in zunehmendem Maße Wärmebildgeräte eingesetzt, deren im allgemeinen reihenförmig angeordnete, eine Zeile bildende Detektoren im Wellenlängenbereich von 8–14 µm arbeiten und im Betriebsfall ausreichend gekühlt werden müssen. Hierzu sind alle Wärmebildgeräte mit einem Kühlsystem ausgestattet. Um mit einem Wärmebildgerät nicht nur ein Wärmestrahlung abgebendes Objekt orten, sondern auch die Entfernung des georteten Objektes messen zu können, werden Wärmebildgeräte mit einem Laserentfernungsmesser kombiniert. Dieser kann in das Wärmebildgerät integriert werden. Für Laserentfernungsmesser werden in jüngerer Zeit immer häufiger $CO_2$-Laser mit einem Empfangsdetektor vorgeschlagen, dessen Empfindlichkeit entsprechend der gewählten $CO_2$-Linie im 10 µm-Bereich liegt und der ebenfalls gekühlt werden muß. Es liegt also nahe, bei Wärmebildgeräten, die mit derartigen Lasern kombiniert werden, die teuren Komponenten dieser Geräte, nämlich die Empfangsoptik, die für das Wärmebildgerät und den Laserentfernungsmesser eingesetzten Detektoren und damit die für diese Signalempfänger notwendigen Kühlsysteme, möglichst weitgehend für beide Zwecke zu nutzen. Es werden daher die bereits vorhandenen Wärmebild-Detektoren für den Empfang der Laserstrahlung mitbenutzt oder auf einem gemeinsamen Träger sowohl eine Detektorzeile für die Bilderzeugung des Wärmebildgerätes als auch ein Einzeldetektor oder mehrere Detektoren für den Empfänger des Laserentfernungsmessers aufgebracht. Bei einer derartigen Detektoranordnung ergibt sich ferner noch der Vorteil, daß die Empfangsoptik des Wärmebildgerätes auch für den Empfänger des Laserentfernungsmessers mitbenutzt werden kann. Bei einem mit einem Laserentfernungsmesser kombinierten Wärmebildgerät, dessen Detektoren mit den Detektoren des Empfängers für den Laserentfernungsmesser auf einem gemeinsamen Träger angeordnet sind, ist somit nur eine gemeinsame Kühlvorrichtung und eine gemeinsame Empfangsoptik erforderlich.

Ein Gerät, bei dem dies verwirklicht ist, ist das in der DE-PS 3 048 809 beschriebene System. Hierbei ist bei einem Wärmebildgerät mit Lasersender und gemeinsamem Wärmebild/Laser-Empfangskanal eine gemeinsame Sensoranordnung vorgesehen, die aus einer Reihenanordnung von Einzeldetektoren für Wärmestrahlung und einer zu dieser Detektorzeile vom Bildfeldmittelpunkt aus senkrecht verlaufenden weiteren Anordnung von Einzeldetektoren oder wenigstens einem Stabdetektor besteht. Bei dem bekannten Gerät erfolgt wie bei gebräuchlichen Wärmebildgeräten die Bilderzeugung in der Höhe durch die Detektorzeile und in der Seite durch Strahlablenkung mittels eines schwingenden Abtast- oder Scanspiegels. Die auf das Ziel gerichtete Visierlinie und damit auch der auf die Visierlinie ausgerichtete Laserstrahl, beschrieben in der Abbildungsebene (= Detektorebene) eine Linie quer zur Detektorzeile. Ein auf dieser Linie angeordneter Einzel- oder Stabdetektor, z.B. einer der mittleren Detektoren aus der Zeile oder ein seitlich zur Zeile angeordneter zusätzlicher Einzeldetektor, ist daher für die Detektion der vom Zielobjekt reflektierten Laserstrahlung zum Zweck der Entfernungsmessung geeignet. Bei einem derartigen Gerät sind somit für das Wärmebildgerät und den Laserentfernungsmesser nur eine gemeinsame Kühlvorrichtung und eine gemeinsame Empfangsoptik erforderlich.

Bei dem aus der DE-PS 3 048 809 bekannten Gerät wird der vom Zielobjekt reflektierte Laserstrahl über den Scanspiegel geleitet, der für die Szenenabtastung durch die Detektorreihenanordnung des Wärmebildgerätes periodische Bewegungen um eine Achse durchführt. Dadurch wird der Einbau einer oder mehrerer speziell gestalteter Detektorreihenanordnungen auch für die Laserstrahlung nebst einem Interferenzfilter im Dewargefäß des Wärmebildgerätes und gleichzeitig die Synchronisation des Sendezeitpunkts der Laserimpulse mit der Stellung des Abtastspiegels erforderlich. Um die bei diesem bekannten Gerät für zwei verschiedene Strahlungsarten vorgesehene Detektorkonfiguration zu vereinfachen, ist bei einem weiteren, aus der DE-OS 3 104 318 bekannten Gerät vorgesehen, daß eine lineare Detektorreihenanordnung gemeinsam für Wärme- und Laserstrahlung verwendet, die Laserstrahlung unmittelbar hinter dem IR-Teleskop noch vor Erreichen des Abtastspiegels aus dem Strahlengang ausgekoppelt und anschließend über eine das IR-Objektiv beinhaltende optische Baugruppe auf in den Randbereichen der Reihenanordnung gelegene Detektoren fokussiert wird. Hierzu werden Laserstrahlung und Wärmestrahlung in einer Spektralteiler/Umlenkeinheit getrennt, wobei die Laserstrahlung über eine nachfolgende optische Baugruppe mit Laserempfangsobjektiv, IR-Objektiv, einer bildfeldseitigen Linse sowie einem die Wärmestrahlung reflektierenden und die Laserstrahlung hindurchlassenden weiteren Spektralteiler auf den ausgewählten Laserdetektor der Reihenanordnung abgebildet und die vom Scanspiegel reflektierte Wärmestrahlung in die optische Baugruppe und damit wieder in den gemeinsamen Empfangskanal eingekoppelt und von dem weiteren Spektralteiler ebenfalls in die Detektorebene fokussiert wird. Die Justage des Laserbündels auf den Laserdetektor wird dabei durch Drehung der Spektralteiler/Umlenkeinheit um ihre Längsachse erreicht. Man ist bei dem aus der DE-OS 3 104 318 bekannten Gerät also nicht mehr auf den mittleren Detektor der Reihenanordnung oder zusätzliche, seitlich auf einer Linie quer zur Reihe angeordnete Einzeldetektoren angewiesen und geht hierbei davon aus, daß die Detektorreihenanordnung für Wärmestrahlung an ihren Enden Detektoren enthält, die nicht für die Wärmebilddarstellung benutzt werden. Wärmebildgeräte, die nicht von vornherein für den Empfang von Laserstrahlung ausgelegt sind, können dann in entsprechender Weise dadurch für den Empfang von Laserstrahlung nutzbar gemacht werden, daß man in den Randbereichen der Reihenanordnung gelegene Detektoren für den Empfang von Laserstrahlung verwendet. Allerdings geht dabei eine entsprechende Anzahl von Zeilen beim Wärmebild verloren. Durch die bei dem Gerät nach der DE-OS 3 104 318 vorgesehene Art der Trennung und Zusammenfassung von Laserempfangs- und Wärmebildkanal kann aber ein unmodifizierter Reihensensor zum gleichzeitigen Empfang von Wärme- und Laserstrahlung verwendet werden, so daß auch bestehende Wärmebildgeräte ohne Modifikation der Detektoranordnung für den Empfang von Laserstrahlung nutzbar gemacht werden können. Das bekannte Gerät sieht zur Erzielung dieses Vorteils aber zwei optische Baugruppen vor, die relativ große optische Bauteile beinhalten. Derartige zusätzliche optische Baugruppen beanspruchen daher relativ viel Platz. Dieser Platzbedarf kann bei der Integration der beiden optischen Baugruppen in bestehende Wärmebildgeräte bei den dort vorgegebenen Räumlichkeiten zu Schwierigkeiten führen und dann doch größere Modifikationen bestehender Geräte erfordern. Außerdem sind die beiden optischen Baugruppen zur Trennung und Zusammenführung von Laser- und Wärmestrahlung mit Spektralschichten ausgebildet, so daß sowohl für die Laser- als auch für die Wärmestrahlung optische Verluste in Kauf genommen werden müssen. Ein weiterer Nachteil liegt darin, daß bei Benutzung eines vorgegebenen Detektors aus der für den Empfang von Wärmestrahlung vorgesehenen Zeile oder Reihenanordnung zum Empfang von Laserstrahlung die Größe dieses Detektors in Verbindung mit der Brennweite des Wärmebildgerätes nicht an die Divergenz des Lasersendestrahles angepaßt ist.

Die aufgezeigten Probleme zeigen, daß es bei der Nutzbarmachung eines bestehenden, zum Empfang von Wärmestrahlung dienenden optischen Systems zum gleichzeitigen Empfang von Laserstrahlung, also z.B. bei der Kombination eines bestehenden Wärmebildgerätes mit einem Laserentfernungsmesser, besonders schwierig ist, das bestehende optische System oder das bestehende Wärmebildgerät mit wenigen Bauteilen kostengünstig so zu modifizieren, daß es weiterhin mit einer Reihe üblicher, gemeinsamer Baugruppen aufgebaut werden kann und bei der Abwandlung nur geringe optische Verluste verursacht werden. Der Erfindung liegt daher die Aufgabe zugrunde, bei der Lösung des Problems, ein bestehendes, zum Empfang von Wärmestrahlung dienendes optisches System gleichzeitig für den Empfang von Laserstrahlung nutzbar zu machen, einen Weg aufzuzeigen, der es bei möglichst geringen optischen Verlusten für die Wärme- und die Laserstrahlung ermöglicht, daß das optische System zum gleichzeitigen Empfang beider Strahlungen weiterhin mit einer Reihe üblicher, gemeinsamer Baugruppen aufgebaut werden kann, diese für den Empfang von Wärmestrahlung bereits vorhandenen Baugruppen nicht oder nur so gering wie möglich modifiziert werden müssen und die dann evtl. erforderlichen zusätzlichen Bauteile möglichst kostengünstig hergestellt werden können.

Diese Aufgabe wird erfindungsgemäß mit dem in Anspruch 1 definierten optischen System gelöst.

Bei dem erfindungsgemäßen optischen System werden die Wärme- und die Laserstrahlung in einem gemeinsamen Empfangskanal über den Scanspiegel geleitet, erst danach und nach der Trennung der Strahlungskegel auf der Abbildungsseite getrennt, wobei die Wärmestrahlung im ursprünglichen gemeinsamen Empfangskanal alleine weitergeführt und ungeschwächt auf die Detektoranordnung gerichtet wird. Die Laserstrahlung wird also von der Wärmestrahlung getrennt und über eine separate optische Baugruppe auf einen geeigneten Detektor geleitet. Um eine Auskopplung der Laserstrahlung nach einer völligen geometrischen Trennung der Strahlungskegel der Wärme- und der Laserstrahlung vornehmen zu können, ist zwar eine Synchronisation des Sendezeitpunktes der Laserimpulse mit der Winkelstellung des Scanspiegels erforderlich, bei dem erfindungsgemäßen optischen System ist jedoch anstelle einer physikalischen Strahlungstrennung und -zusammenführung von Wärme- und Laserstrahlung mit Spektralteilern eine Auskopplung lediglich der Laserstrahlung aus dem gemeinsamen Empfangskanal über eine geometrische Strahlenteilung ohne Spektralschichten realisierbar, so daß die optische Baugruppe zur Weiterleitung der ausgekoppelten Laserstrahlung auf die Detektoranordnung lediglich geometrisch umlenkende Elemente erfordert. Die zusätzlich erforderlichen Bauteile der optischen Baugruppe können daher kostengünstig und relativ klein hergestellt werden, so daß die optische Baugruppe insgesamt einfach aufgebaut werden kann und nur einen geringen Platzbedarf hat. Die Auskopplung der Laserstrahlung bei dem erfindungsgemäßen optischen System läßt sich daher ohne Schwierigkeiten und ohne besondere Modifikationen in bestehende Systeme zum Empfang von Wärmestrahlung integrieren. Außerdem läßt sich bei dem erfindungsgemäßen optischen System die Auskopplung der Laserstrahlung verlustarm durchführen, da keine physikalische Trennung und Zusammenführung der beiden Strahlungsarten über Spektralteiler erfolgt, sondern nur eine geometrische Strahlablenkung lediglich der Laserstrahlung über einfache Umlenkelemente vorgesehen ist. Das erfindungsgemäße optische System ermöglicht es auch, für die Wärme- und die Laserstrahlung eine gemeinsame Detektoranordnung auf einem einzigen Träger vorzusehen, so daß das optische System zum gleichzeitigen Empfang beider Strahlungen auch im Hinblick auf die Detektoranordnung mit einer üblichen, gemeinsamen Baugruppe aufgebaut und ein aus üblichen Baugruppen bestehendes optisches System zum Empfang von Wärmestrahlung ohne große Modifikationen mit gemeinsamen Baugruppen gleichzeitig zum Empfang von Laserstrahlung nutzbar gemacht werden kann.

Eine im Hinblick auf die Detektoranordnung besonders vorteilhafte Ausführungsform eines erfindungsgemäßen optischen Systems erhält man dann, wenn zum Empfang der Wärme- und der Laserstrahlung auf einem einzigen Träger eine Detektorreihenanordnung vorgesehen ist, und der zum Empfang der Laserstrahlung dienende Detektor in den Randbereichen der Detektorreihenanordnung liegt. Hierbei ist der Detektor zum Empfang der Laserstrahlung vorzugsweise von einem Detektor der Reihenanordnung selbst gebildet. Es sind jedoch auch andere Detektorkonfigurationen denkbar. So ist es z.B. möglich, daß der Detektor zum Empfang der Laserstrahlung aus einem in der Verlängerung der Reihenanordnung liegenden, davon räumlich jedoch abgesetzten Zusatzdetektor besteht. In den beiden zuletzt genannten Fällen ergibt sich durch eine gemeinsame Detektoranordnung, das heißt durch eine Anordnung der Detektoren für Wärme- und Laserstrahlung auf einem gemeinsamen Träger, der Vorteil, daß nur ein einziges Kühlsystem erforderlich ist. Wird der Detektor zum Empfang der Laserstrahlung von einem Detektor der Reihenanordnung selbst gebildet, so ergibt sich darüberhinaus der Vorteil, daß eine bestehende, schon für bisher übliche Wärmebildgeräte verwendete Detektoranordnung ohne Modifikation gleichzeitig für den Empfang von Wärme- wie auch von Laserstrahlung verwendet werden kann. Ist der Detektor zum Empfang der Laserstrahlung dagegen von der Reihenanordnung räumlich abgesetzt, so muß eine bestehende Detektoranordnung lediglich geringfügig modifiziert werden. Dies ist auch der Fall, wenn zum Empfang der Wärmestrahlung auf einem einzigen Träger eine Detektorreihenanordnung und zum Empfang der Laserstrahlung mindestens ein auf einer Linie quer zur Reihenanordnung auf demselben Träger liegender zusätzlicher Detektor vorgesehen ist. Es ist auch möglich, daß zum Empfang der Wärmestrahlung auf einem Träger eine Detektorreihenanordnung vorgesehen ist, und daß der Detektor zum Empfang der Laserstrahlung auf einem separaten, von dem Träger der Reihenanordnung räumlich und körperlich getrennten Träger angeordnet ist. Dies hat zwar den Nachteil einer eigenen, gesonderten Kühlung für den Detektor zum Empfang der Laserstrahlung, kann aber systemtechnisch gewisse Vorteile mit sich bringen, z.B. wenn die Kühlung der Detektoranordnung für Wärmestrahlung oder diese Detektoranordnung selbst ausfällt. In einem solchen Fall ist die Laserentfernungsmessung noch voll funktionsfähig, da sie ja eine von dem Empfang der Wärmestrahlung unabhängige Sensoranordnung besitzt.

In bevorzugter Weise ist bei einem erfindungsgemäßen optischen System zur Auskopplung der Laserstrahlung aus dem gemeinsamen Empfangskanal ein Auskoppelelement vorgesehen, das aus einem totalreflektierenden Umlenkelement besteht. Ein derartiges Auskoppelelement ermöglicht eine besonders verlustarme Auskopplung der Laserstrahlung. Hierbei besteht das Auskoppelelement aus einem Umlenkspiegel oder einem Umlenkprisma. Das Auskoppelelement kann auch Bestandteil der optischen Baugruppe sein. Bei einem erfindungsgemäßen optischen System ist jedoch auch eine unmittelbare Auskopplung der Laserstrahlung in die optische Baugruppe, also ohne Auskoppelelement, möglich.

Bei einem erfindungsgemäßen optischen System ist es vorteilhaft, wenn die Auskopplung der Laserstrahlung aus dem gemeinsamen Empfangskanal dann erfolgt, wenn sich der Scanspiegel jeweils in Umkehrposition befindet. Auf diese Weise kann – da sich der Scanspiegel in seinen Umkehrpositionen für eine kurze Weile in Ruhestellung befindet – der Einfluß der unbekannten Laufzeit der Laserimpulse zu einem Zielobjekt und zurück weitgehend vermindert werden.

Die bei einem erfindungsgemäßen optischen System vorgesehene optische Baugruppe zur Weiterleitung der ausgekoppelten Laserstrahlung auf die für Laserempfang geeignete Detektoranordnung ist in vorteilhafter Weise so ausgebildet, daß sie ein optisch abbildendes System enthält, welches den Laserfleck der ausgekoppelten Laserstrahlung auf den zum Empfang der Laserstrahlung dienenden Detektor fokussiert. Dabei ist es zweckmäßig, wenn der Abbildungsmaßstab des optisch abbildenden Systems derart gewählt ist, daß eine Anpassung des durch Senderdivergenz und Brennweite des optischen Systems zum Empfang von Wärmestrahlung gegebenen Laserflecks an die Größe des zum Empfang der Laserstrahlung dienenden Detektors erfolgt.

Ferner ist es vorteilhaft, wenn die optische Baugruppe eine Lichtleitfaser enthält, wobei es besonders vorteilhaft ist, wenn die Lichtleitfaser aus einer Gradientenfaser besteht. Eine derartige Faser ermöglicht eine relativ große Eintrittsfläche bei kleiner Austrittsfläche und damit eine besonders gute Anpassung der Laserstrahldivergenz an die Größe des betreffenden Detektorelementes. Außerdem kann mit dieser Anordnung die Scanspiegelbewegung während der Laufzeit der Laserimpulse zum Zielobjekt und zurück berücksichtigt werden.

Eine abgewandelte Ausführungsform eines erfindungsgemäßen optischen Systems ist so aufgebaut, daß das letzte Glied der optischen Baugruppe aus einem Umlenkelement in Form eines für Wärmestrahlung durchlässigen Einkoppelelementes besteht, welches unmittelbar vor den zum Empfang der Wärme- und der Laserstrahlung dienenden, aus einer Reihenanordnung bestehenden Detektoren angeordnet und in dem vor dem Detektor für Laserstrahlung liegenden Abschnitt mit einer die Laserstrahlung in Richtung auf diesen Detektor reflektierenden Spektralteilerschicht ausgebildet ist. Diese Lösung ist dann vorteilhaft, wenn die zum Empfang der Laserstrahlung vorgesehenen Detektoren im Randbereich der Detektoranordnung zum Empfang der Wärmestrahlung durch ein Einkoppelelement abgedeckt werden, da sie dann – wenn auch unter Berücksichtigung einer gewissen Abschwächung – für den Empfang von Wärmestrahlung noch mitbenutzbar sind. Hierbei erleidet nur der Randbereich gewisse optische Verluste. Ein Vorteil dieser Lösung liegt aber in der gegenüber bekannten Spektraleinheiten kleineren und billigeren Bauweise.

Schließlich ist bei einem erfindungsgemäßen optischen System auch eine Auskopplung der Laserstrahlung an zwei Stellen nach der völligen geometrischen Trennung der Strahlungskegel der Wärme- und der Laserstrahlung möglich, vorzugsweise in den Umkehrpositionen des Scanspiegels. Hierbei ist zwar für jede Auskopplung jeweils eine optische Baugruppe vorzusehen, eine Duplizierung der erfindungsgemäßen Auskopplung der Laserstrahlung hat jedoch den Vorteil, daß bei Vergrößerungsumschaltung des Systems bzw. Divergenzumschaltung des Lasers jeweils die optimale Anpassung gewählt werden kann.

Bei einem ersten Ausführungsbeispiel der aus der DE-OS 3 104 318 bekannten Einrichtung wird der vom Lasersender ausgehende Sendestrahl parallel zur optischen Achse des Empfangskanals über eine eigene Sendeoptik ausgestrahlt. Bei einem anderen Ausführungsbeispiel der bekannten Einrichtung wird der Sendestrahl mittels eines senkrecht zur optischen Achse des Empfangskanals verlaufenden, in diesen hineinragenden und aus dieser Stellung herausklappbaren Umlenkprismas in den Empfangskanal eingekoppelt und dann über dessen IR-Teleskop ausgesendet. Auf diese Weise wird eine eigene Sendeoptik für den auszusendenden Laserstrahl eingespart, wobei das erforderliche Umlenkprisma billiger ist als ein ansonsten erforderliches Galilei-Fernrohr. Zur Einkopplung des Sendestrahles in den Empfangskanal muß das Umlenkprisma aber in den Empfangskanal hineingeschwenkt werden, so daß es – wenn auch nur mit dem die zweite umlenkende Prismenfläche aufweisenden Ende – in diesen hineinragt. Hierdurch wird ein Teil des Empfangskanals abgeschattet. Außerdem wird dabei der Sendestrahl in den Randbereich der Optik eingekoppelt, so daß für den Sendestrahl die Benutzung dieses im allgemeinen hinsichtlich der optischen Güte gegenüber dem mittleren Bereich schlechteren Teiles der Optik in Kauf genommen werden muß. Schließlich ergeben sich bei einer Teilausnutzung der Optik gegenüber einer Vollausnutzung schlechtere Bündelungseigenschaften. Dies ist hinsichtlich der Divergenz des Laserstrahles und damit insbesondere bei Laserentfernungsmessern von Nachteil, da bei diesen eine starke Bündelung des auszusendenden Strahles erforderlich ist.

Einer Weiterbildung der Erfindung liegt daher die Aufgabe zugrunde, den gemeinsamen Empfangskanal und die für Wärme- und Laserstrahlung gemeinsame Empfangsoptik auch für die Aussendung des Laserstrahles nutzbar zu machen und dabei ohne Beeinträchtigung des Empfangskanals möglichst gute optische Bedingungen für die Sendestrahlung zu gewährleisten.

Diese Aufgabe wird dadurch gelöst, daß die vom Lasersender ausgehende Laserstrahlung über den abgetrennten Laserempfangskanal und den gemeinsamen Empfangskanal ausgesendet wird, daß zur Trennung der Lasersende- und der Laserempfangsstrahlung in dem abgetrennten Laserempfangskanal eine an sich bekannte Polarisationsweiche vorgesehen ist, und daß in dem Sendestrahlengang vor der IR-Optik ein optisches Element vorgesehen ist, das mit der IR-Optik ein Sendeteleskop bildet.

Bei einem derartigen optischen System wird die Sendestrahlung also nicht über eine eigene Sendeoptik abgestrahlt, sondern in den abgetrennten Laserempfangskanal eingekoppelt und über die Empfangsoptik abgestrahlt. Zur Aussendung des Laserstrahles wird somit der gemeinsame Empfangskanal mit der gemeinsamen Empfangsoptik genutzt. Dabei wird infolge der Einkopplung der Sendestrahlung in den abgetrennten Laserempfangskanal ein unmittelbarer Eingriff optischer Elemente in den gemeinsamen Empfangskanal vermieden, so daß der Empfangskanal nicht abgeschattet wird und die Empfangsoptik voll für die Abstrahlung des Sendestrahles nutzbar ist. Auf diese Weise sind bei dem erfindungsgemäßen optischen System ohne Beeinträchtigung des Empfangskanals gute optische Bedingungen für die Sendestrahlung gegeben. Die Sendestrahldivergenz kann deshalb sehr klein gehalten werden.

Ausführungsbeispiele eines erfindungsgemäßen optischen Systems zum gleichzeitigen Empfang von Wärme- und Laserstrahlung sind im folgenden anhand der Zeichnung näher beschrieben.

Es zeigt

Fig. 1 in schematischer Darstellung ein optisches System zum gleichzeitigen Empfang von Wärme- und Laserstrahlung, welches in einem mit einem Laserentfernungsmesser kombinierten Wärmebildgerät mit gemeinsamen Empfangskanal für Wärme- und Laserstrahlung realisiert ist,

Fig. 2 den Strahlenverlauf in dem gemeinsamen Empfangskanal mit einem Scanspiegel, einer Detektoranordnung und einer Auskopplung der Laserstrahlung aus dem gemeinsamen Empfangskanal,

Fig. 3 und 4 eine Draufsicht bzw. eine Seitenansicht im Bereich vor der Detektoranordnung mit der Auskopplung der Laserstrahlung über eine optische Baugruppe,

Fig. 5 bis 10 verschiedene Ausführungsformen von zur Auskopplung der Laserstrahlung einsetzbaren optischen Baugruppen,

Fig. 11 und 12 eine Seitenansicht bzw. eine Draufsicht im Bereich vor der Detektoranordnung mit einer weiteren Ausführungsform einer optischen Baugruppe zur Auskopplung der Laserstrahlung,

Fig. 13 und 14 in Draufsicht verschiedene Detektoranordnungen zum gemeinsamen Empfang von Wärme- und Laserstrahlung,

Fig. 15 in Seitenansicht die Auskopplung der Laserstrahlung auf eine separate Detektoranordnung,

Fig. 16 in Seitenansicht die Auskopplung der Laserstrahlung mittels eines als Umlenkspiegel ausgebildeten Auskoppelelementes und

Fig. 17 in Seitenansicht die Auskopplung der Laserstrahlung ohne eigenes Auskoppelelement unmittelbar in eine optische Baugruppe.

Fig. 18 den Strahlenverlauf in dem gemeinsamen Empfangskanal mit einem Scanspiegel, einer Detektoranordnung, einer Auskopplung der Laserstrahlung aus dem gemeinsamen Empfangskanal und einer Einkopplung der Sendestrahlung in den abgetrennten Laserempfangskanal und

Fig. 19 eine Draufsicht auf eine Anordnung nach Fig. 18 im Bereich vor der Detektoranordnung.

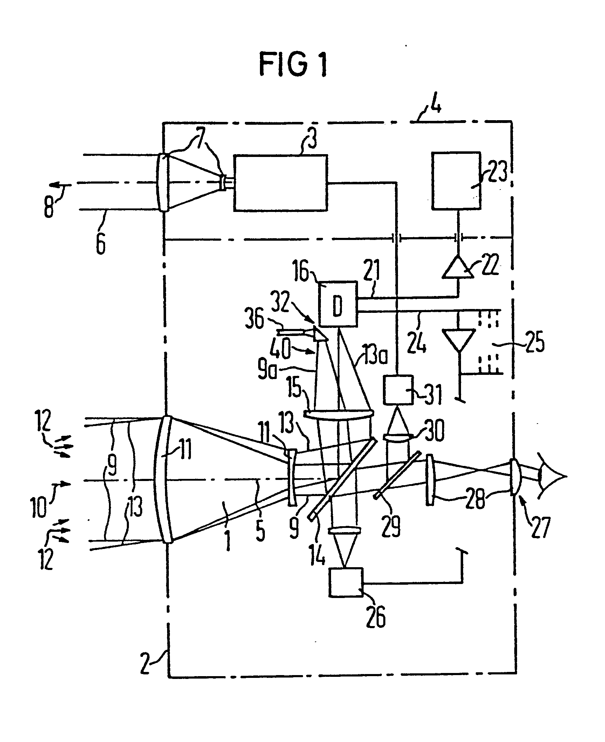

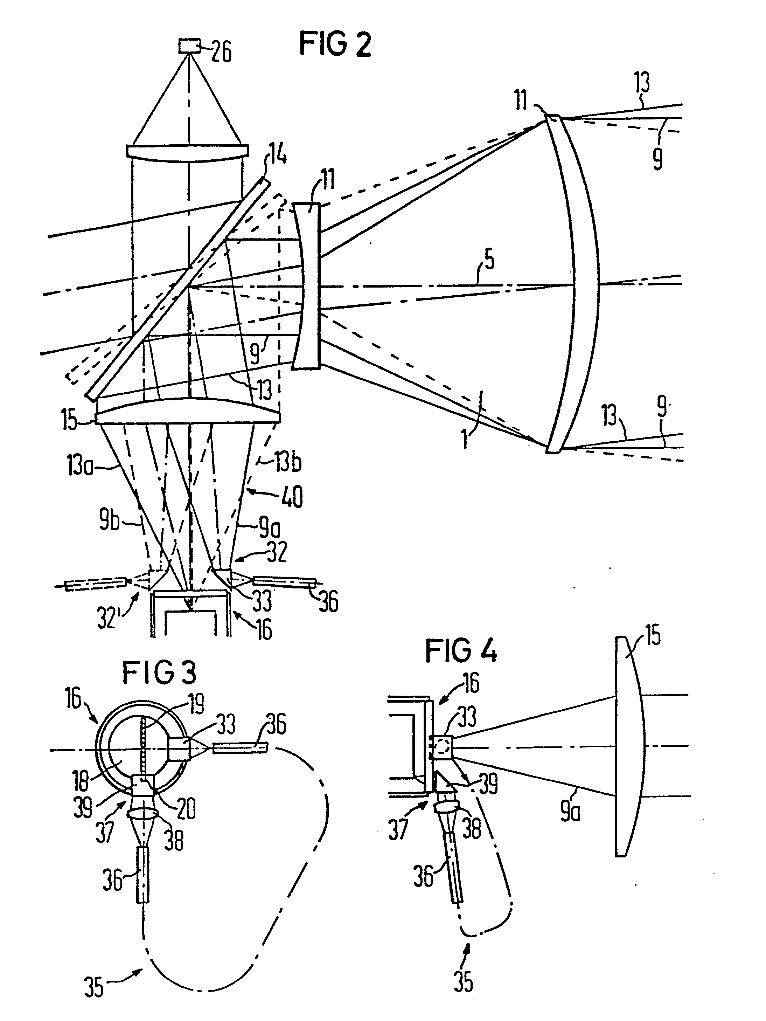

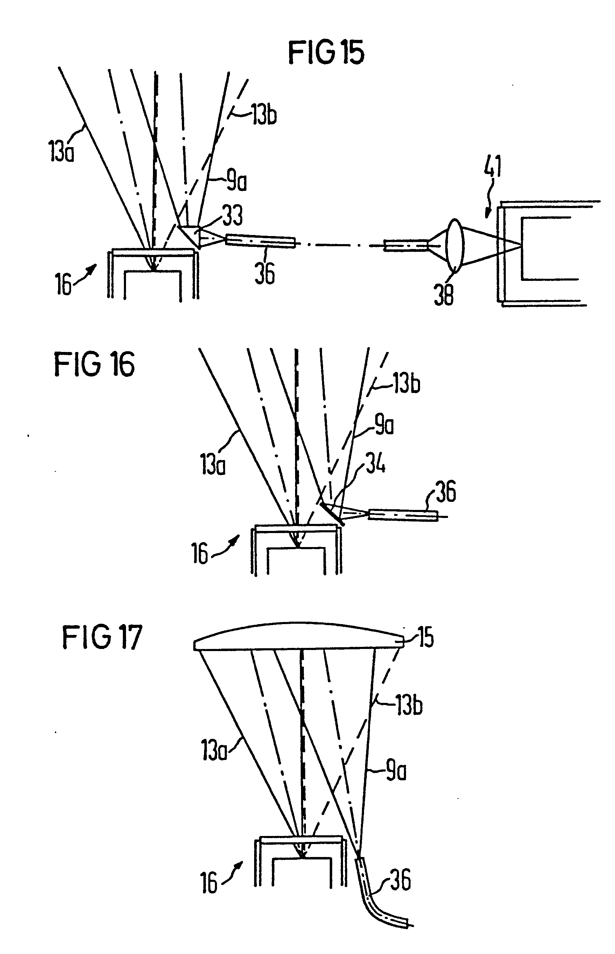

In Fig. 1 ist eine optronische Einrichtung mit einem Wärmebildgerät und einem Laserentfernungsmesser dargestellt, wobei das Wärmebildgerät und der für Wärme- und Laserstrahlung gemeinsame Empfangskanal 1 in einem ersten Gehäuse 2 und der Lasersender 3 in einem zweiten Gehäuse 4 angeordnet und die beiden Gehäuse starr miteinander verbunden sind. Der Lasersender 3 ist dadurch mit dem gemeinsamen Empfangskanal 1 so gekoppelt, daß die optische Achse des Lasersenders parallel zur optischen Achse 5 des Empfangskanals, welche gleichzeitig die Visierlinie des Wärmebildgerätes darstellt, ausgerichtet ist. Die auszusendende Laserstrahlung 6 wird von einem Sendeteleskop 7 gebündelt und in Richtung des Pfeiles 8 auf ein nicht dargestelltes Zielobjekt abgestrahlt. Die von dem Zielobjekt reflektierte Laserstrahlung 9 trifft in Richtung des Pfeiles 10 auf die für Wärme- und Laserstrahlung gemeinsame Empfangsoptik 11 und tritt durch diese hindurch parallel zu der optischen Achse 5 des Empfangskanals 1 in den Afokalteil des Wärmebildgerätes ein. Auch die von der Bildszene ausgehende und durch Pfeile 12 angedeutete Wärmestrahlung 13 tritt über die Empfangsoptik 11 in den Afokalteil ein. Beide Strahlungen, die Laserstrahlung 9 und die Wärmestrahlung 13, verlassen den Afokalteil als parallele Strahlenbündel und treffen auf einen beidseitig verspiegelten Scanspiegel 14, der in bekannter Weise zur Erzeugung eines Wärmebildes, d.h. zum Schreiben einer Zeile des Wärmebildes, dient, wobei die verspiegelte Rückseite des Scanspiegels in ebenfalls bekannter Weise zur Wiedergabe des Wärmebildes im sichtbaren Bereich verwendet wird. Derartige Bilderzeugungs- und Wiedergabeverfahren sind in der Wärmebildtechnik allgemein bekannt, z.B. aus der Zeitschrift «Wehrtechnik» Oktober 1980, Seiten 21–23, der DE-AS 2 332 245 oder der US-PS 2 989 643. Die von dem Scanspiegel 14 abgelenkten parallelen Strahlenbündel der Wärme- und der Laserstrahlung werden von einer abbildenden IR-Optik 15 auf eine Detektoranordnung 16 gerichtet, die in der Bildebene der IR-Optik angeordnet ist. Dabei werden die durch die Abtast-Schwenkbewegungen des Scanspiegels erzeugten, für dessen Umkehrpositionen eingezeichneten Strahlungskegel 13a und 13b (Fig. 2) der Wärmestrahlung auf die Detektoranordnung 16 fokussiert, während die ebenfalls für die Umkehrpositionen des Scanspiegels eingezeichneten Strahlungskegel 9a und 9b der Laserstrahlung durch die Bewegungen des Scanspiegels in unterschiedliche Richtungen verlaufen und die Laserstrahlung mindestens an einer Stelle nach der völligen geometrischen Trennung der Strahlungskegel der Wärme- und der Laserstrahlung, z.B. im Bereich des Strahlungskegels 9a, oder auch im Bereich beider Strahlungskegel 9a und 9b, aus dem gemeinsamen Empfangskanal 1 ausgekoppelt und von der Wärmestrahlung getrennt über jeweils eine optische Baugruppe 35 (Fig. 3, 4) auf einen zum Empfang der Laserstrahlung geeigneten Detektor gerichtet wird. Im Ausführungsbeispiel der Figuren 1 bis 4 ist zum Empfang der Wärme- und der Laserstrahlung eine einzige Detektoranordnung 16 vorgesehen, die aus einer auf einem einzigen Träger 18 angeordneten Detektorreihe 19, z.B. einer Zeile von 180 Detektoren, besteht, wobei der zum Empfang der Laserstrahlung dienende Detektor in den Randbereichen der Detektorreihe liegt und dann zweckmäßigerweise von einem Detektor 20 der Reihe 19 selbst gebildet ist. Die Detektoranordnung 16 wandelt die empfangene Wärme- bzw. Laserstrahlung in elektrische Signale um, wobei die von der Laserstrahlung stammenden elektrischen Ausgangssignale 21 (Fig. 1) der Detektoranordnung in üblicher Weise über eine Verstärkeranordnung 22 einer z.B. im zweiten Gehäuse 4 angeordneten, die Laufzeit der Lasersendeimpulse in Entfernungswerte umsetzenden und die gemessene Entfernung anzeigenden Auswerteelektronik 23 zugeführt wird, während die von der Wärmestrahlung stammenden elektrischen Ausgangssignale 24 in ebenfalls üblicher, z.B. aus den oben angeführten Literaturstellen bekannter Weise über eine Vielkanalverstärkeranordnung 25 einer LED-Anordnung 26 zugeleitet werden, welche die verstärkten elektrischen Ausgangssignale dann in sichtbares Licht umwandelt, so daß das Wärmebild nunmehr im sichtbaren Bereich in bekannter Weise über die verspiegelte Rückseite des Scanspiegels 14 in ein Okular oder eine Visiereinrichtung 27 eingespiegelt wird. Dabei ist zwischen der Rückseite des Scanspiegels 14 und einer abbildenden Optik 28 der Visiereinrichtung noch ein Strahlteiler 29 angeordnet, der einen geringen Teil der Strahlung über eine weitere abbildende Optik 30 auf einen sogenannten Scan-Position-Sensor (SPS) 31 zuführt. Dies ist ein optisch-elektrischer Sensor, der den Sendezeitpunkt der Laserimpulse mit der Winkelstellung des Scanspiegels synchronisiert, also den Lasersender 3 triggert, d.h. die Position des Scanspiegels feststellt und in der richtigen Stellung des Spiegels den Laserimpuls auslöst. Die richtige Stellung des Scanspiegels ist im vorliegenden Falle dann gegeben, wenn die vom Zielobjekt reflektierte, empfangene und achsparallel einfallende Laserstrahlung durch die Bewegungen des Scanspiegels 14 auf diejenige Stelle oder Stellen gerichtet wird, an der bzw. an denen die Auskopplung der Laserstrahlung aus dem gemeinsamen Empfangskanal erfolgt. Im Ausführungsbeispiel nach den Fig. 1 bis 4 ist eine mittelbare Auskopplung der Laserstrahlung über ein Auskoppelelement 32 vorgesehen, das aus einem totalreflektierenden Umlenkelement besteht. Das Auskoppelelement ist – wie sich aus obigen Ausführungen ergibt – so angeordnet, daß die Auskopplung der Laserstrahlung aus dem gemeinsamen Empfangskanal dann erfolgt, wenn die Strahlungskegel der Wärme- und der Laserstrahlung, z.B. die Strahlungskegel 9a und 13b, geometrisch völlig voneinander getrennt sind. Vorzugsweise erfolgt die Auskopplung dann, wenn sich der Scanspiegel 14 jeweils in Umkehrposition befindet. Die Umkehrpositionen des Scanspiegels sind in Fig. 2 mit ausgezogenen bzw. gestrichelten Linien eingezeichnet. Durch ein weiteres in Fig. 2 zusammen mit dem Strahlungskegel 9b der Laserstrahlung gestrichelt eingezeichnetes Auskoppelelement 32' ist angedeutet, daß die Auskopplung der Laserstrahlung auch auf der dem Strahlungskegel 13b gegenüberliegenden Seite nach der völligen geometrischen Trennung der Strahlungskegel von Wärme- und Laserstrahlung durchgeführt werden kann. In diesem Fall findet also bei jeder Umkehrposition des Scanspiegels eine Auskopplung der Laserstrahlung statt. Als Auskoppelelement ist bei dem Ausführungsbeispiel der Fig. 1 bis 4 ein Umlenkprisma 33 vorgesehen, das in der Zeichnung als Dachkantprisma dargestellt ist. Das Auskoppelelement kann – wie in Fig. 16 gezeigt ist – aber auch aus einem Umlenkspiegel 34 bestehen. Zweckmäßigerweise ist das Auskoppelelement 32 bzw. 32' justierbar in Bezug auf die optische Achse des Gesamtsystems. Außerdem kann das Auskoppelelement Bestandteil einer optischen Baugruppe 35 sein, welche dazu vorgesehen ist, die ausgekoppelte Laserstrahlung von der Wärmestrahlung getrennt auf den zum Empfang der Laserstrahlung geeigneten Detektor 20 zu richten. Bei dem Ausführungsbeispiel nach den Fig. 1 bis 4 besteht die optische Baugruppe 35 nach dem als Umlenkprisma 33 ausgebildeten Auskoppelelement aus einer Lichtleitfaser 36, insbesondere aus einer Gradientenfaser, deren Anfang im Bildpunkt der IR-Optik 15 angeordnet ist, und einem optisch abbildenden System 37, bestehend aus einem Linsensystem 38 und einem z.B. ebenfalls als Dachkantprisma ausgebildeten Umlenkelement 39, welches den Laserfleck der aus der Lichtleitfaser 36 austretenden Laserstrahlung auf den Detektor 20 fokussiert. Dabei ist der Abbildungsmaßstab des optisch abbildenden Systems 37 derart gewählt, daß eine Anpassung des Laserflecks an die Größe des Detektors 20 erfolgt.

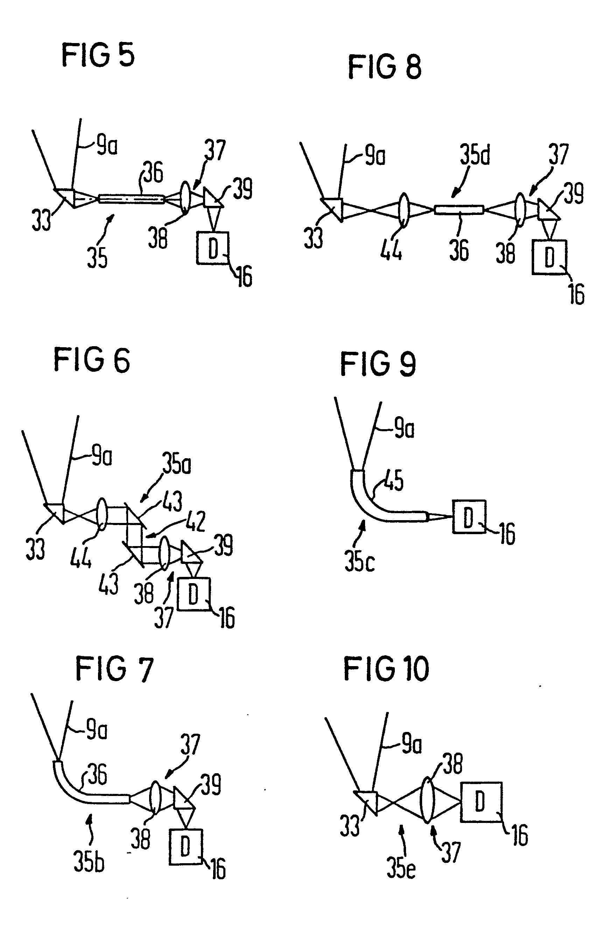

Bei einem erfindungsgemäßen optischen System ist zwar die Auskopplung grundsätzlich nach dem Scanspiegel 14 im konvergierenden Teil 40 des Strahlenganges an einer oder auch an mehreren Stellen nach der völligen geometrischen Trennung der durch die Bewegungen des Scanspiegels in unterschiedliche Richtungen verlaufenden Strahlungskegel 13a, 13b bzw. 9a, 9b der Wärme- und der Laserstrahlung vorgesehen, jedoch sind für die Art der Auskopplung der Laserstrahlung aus dem gemeinsamen Empfangskanal und für die Ausbildung der optischen Baugruppe wie auch der Detektoranordnung verschiedene, von dem Ausführungsbeispiel nach den Fig. 1 bis 4 abweichende Ausführungsformen möglich. Diese sind anhand der Fig. 6–10, 13 bis 15 und 17 im folgenden noch näher beschrieben.

Die Fig. 17 zeigt im Gegensatz zu der mittelbaren Auskopplung der Fig. 1 bis 4 über ein Auskoppelelement nunmehr eine unmittelbare Auskopplung der Laserstrahlung 9a aus dem gemeinsamen Empfangskanal, wobei die Laserstrahlung ohne Auskoppelelement direkt in eine Lichtleitfaser 36 einer optischen Baugruppe eingekoppelt wird und der Anfang dieser Lichtleitfaser wiederum im Bildpunkt der IR-Optik 15 angeordnet ist.

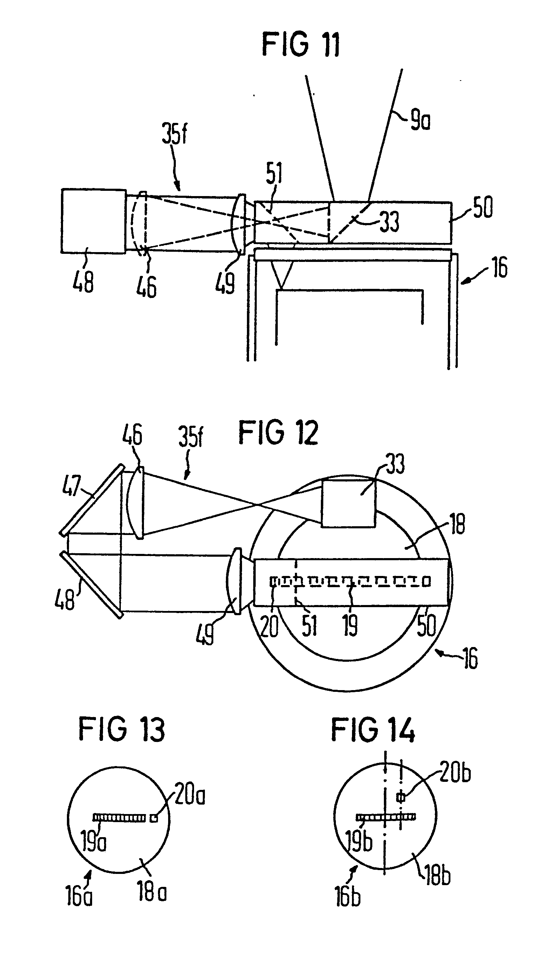

In den Fig. 13–15 sind verschiedene Detektorkonfigurationen gezeigt. So sind nach Fig. 13 zum Empfang der Wärme- und der Laserstrahlung zwar eine gemeinsame Detektoranordnung 16a auf einem einzigen Träger 18a und zum Empfang der Wärmestrahlung wieder eine Detektorreihe 19a vorgesehen, jedoch besteht hier der Detektor zum Empfang der Laserstrahlung aus einem in der Verlängerung der Reihe 19a liegenden, davon räumlich jedoch abgesetzten Zusatzdetektor 20a.

In Fig. 14 ist wiederum eine gemeinsame Detektoranordnung 16b auf einem einzigen Träger 18b mit einer Detektorreihe 19b zum Empfang der Wärmestrahlung vorgesehen, jedoch ist zum Empfang der Laserstrahlung mindestens ein auf einer Linie quer zu der Reihe 19b liegender zusätzlicher Detektor 20b vorgesehen.

Anstelle einer gemeinsamen, auf einem einzigen Träger angeordneten Detektoranordnung für den Empfang der Wärme- und der Laserstrahlung ist es auch möglich, daß zum Empfang der Wärmestrahlung, wie bei dem Ausführungsbeispiel in den Fig. 1–4 auf einem Träger 18 eine Detektorreihe 19 vorgesehen ist, während der Detektor zum Empfang der Laserstrahlung auf einem separaten, von dem Träger 18 der Detektorreihe 19 räumlich und körperlich getrennten Träger 41 angeordnet ist (Fig. 15).

Verschiedene optische Baugruppen sind schließlich in den Fig. 5–12 dargestellt.

Fig. 5 zeigt im einzelnen eine optische Baugruppe 35, wie sie bei dem Ausführungsbeispiel der Fig. 1–4 verwendet ist. Diese Baugruppe besteht aus dem Auskoppelelement 33, der Lichtleitfaser 36, dem optisch abbildenden System 37 mit Linsensystem 38 und Umlenkelement 39.

Die optische Baugruppe 35a nach Fig. 6 besteht aus einem Auskoppelelement 33, einem ersten optisch abbildenden System 37 vor der Detektoranordnung, einem diesen optisch abbildenden System vorgeschalteten Umlenksystem 42 mit zwei zueinander parallelen Umlenkspiegeln 43, welche hier so angeordnet sind, daß sie die ausgekoppelte Laserstrahlung parallel zu sich selbst umlenken und einem zweiten, dem Umlenksystem 42 vorgeschalteten, optisch abbildenden System 44.

Bei dem Ausführungsbeispiel nach Fig. 7 ist im Gegensatz zu den Fig. 5 und 6 eine unmittelbare Auskopplung der Laserstrahlung vorgesehen. Die optische Baugruppe 35b besteht dabei lediglich aus einer Lichtleitfaser 36 und aus einem optisch abbildenden System 37 mit Linsensystem 38 und Umlenkelement 39. Das optisch abbildende System kann jedoch auch – wie in Fig. 9 dargestellt – integraler Bestandteil der Lichtleitfaser 45 sein und dann am Ende der Lichtleitfaser vorgesehen werden. Damit besteht die optische Baugruppe 35c lediglich aus der Lichtleitfaser 45.

Die optische Baugruppe 35d nach Fig. 8 weist wie in Fig. 6 außer dem Auskoppelelement 33 noch das optisch abbildende System 37 mit Linsensystem 38 und Umlenkelement 39 vor der Detektoranordnung 16 und das zweite optisch abbildende System 44 nach dem Auskoppelelement 33 auf und ist anstelle eines Umlenksystems mit einer Lichtleitfaser 36 ausgebildet.

Die in Fig. 10 dargestellte optische Baugruppe 35e besteht lediglich aus einem Auskoppelelement 33 und einem optisch abbildenden System 37 mit Linsensystem 38.

Die optische Baugruppe 35f nach den Fig. 11 und 12 schließlich besteht aus einem ersten totalreflektierenden Umlenkelement 33 zur Auskopplung, einem ersten optisch abbildenden System 46, zwei totalreflektierenden Umlenkspiegeln 47, 48, welche so angeordnet sind, daß sie die Strahlung um 180° umlenken, einem zweiten optisch abbildenden System 49 und einem weiteren Umlenkelement in Form eines für Wärmestrahlung durchlässigen Einkoppelelementes 50, welches unmittelbar vor den zum Empfang der Wärme- und der Laserstrahlung dienenden, aus einer Reihenanordnung bestehenden Detektoren 19 angeordnet und in dem vor dem Detektor 20 für Laserstrahlung liegenden Abschnitt mit einer die Laserstrahlung in Richtung auf diesen Detektor reflektierenden Spektralteilerschicht 51 ausgebildet ist. Dabei kann der Detektor zum Empfang der Laserstrahlung, wie z. B. nach der Ausführung nach den Fig. 1–4, von einem Detektor 20 im Randbereich der Reihenanordnung 19 oder auch durch einen zusätzlichen Detektor gebildet werden.

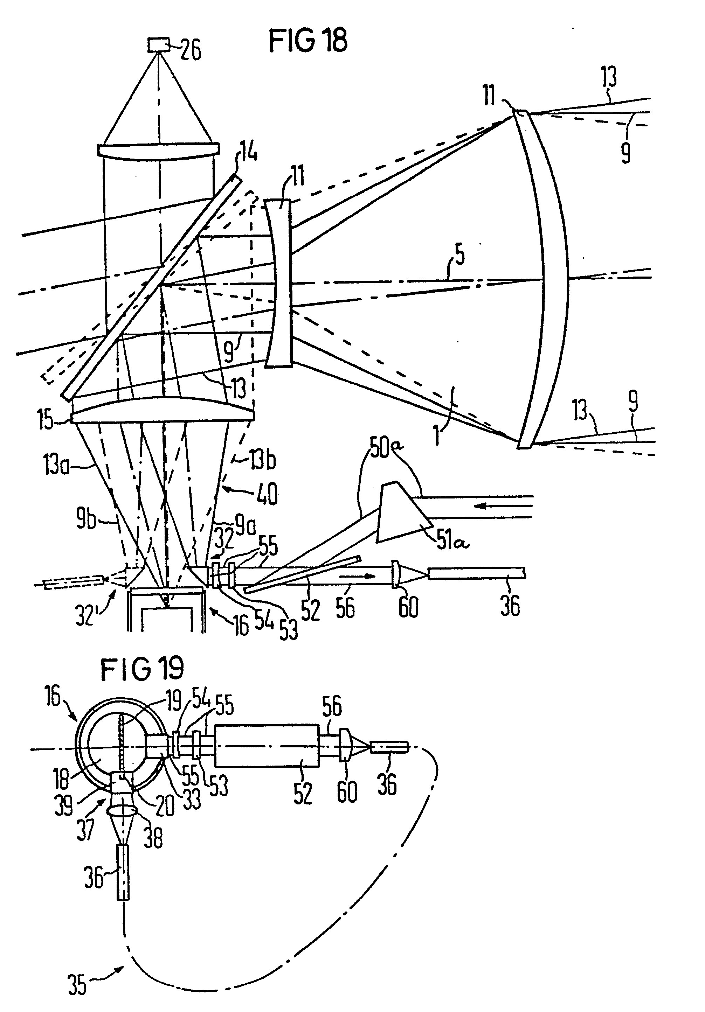

Um nun bei dem vorliegenden optischen System den gemeinsamen Empfangskanal und damit auch die Empfangsoptik für die Aussendung des Laserstrahles zu nutzen, ist nach den Figuren 18 und 19 der Sendestrahl 50a nicht wie in Fig. 1 über einen eigenen Sendekanal abgestrahlt, sondern über eine Polarisationsweiche in den abgetrennten Laserempfangskanal 55 eingekoppelt und über die Empfangsoptik abgestrahlt. Die Einkopplung erfolgt hier in der Weise, daß die vom hier nicht dargestellten, räumlich abgesetzten oder in das Gerät integrierten Lasersender ausgehende, linear polarisierte Laserstrahlung 50a – gegebenenfalls durch ein Ablenkelement 51a auf den abgetrennten Laserempfangskanal 55 gerichtet – mittels eines polarisationsselektiven Elementes 52, das hier insbesondere aus einer Brewster-Platte besteht, in den abgetrennten Laserempfangskanal 55 eingekoppelt und dann in den Strahlengang des gemeinsamen Empfangskanals 1 abgelenkt wird. In dem abgetrennten Laserempfangskanal 55 ist eine in Abstrahlrichtung auf die Brewster-Platte 52 folgende λ/4-Platte 53 angeordnet.

Bei Durchtritt durch die λ/4-Platte 53 wird die linear polarisierte Lasersendestrahlung zirkular polarisiert. Ein nachfolgendes optisches Negativglied 54 in Form einer Streulinse ist vor dem Auskoppelelement 32 angeordnet und so dimensioniert, daß es mit der IR-Optik 15 ein Sendeteleskop bildet. Über dieses Sendeteleskop, den Scanspiegel 14, den gemeinsamen Empfangskanal 1 und die gemeinsame Empfangsoptik 11 wird die Lasersendestrahlung auf ein Zielobjekt abgestrahlt. Die Auslösung des Lasers erfolgt – wie bereits erwähnt – im Umkehrzeitpunkt des Scanspiegels, wobei dieser Zeitpunkt mit dem Positionssensor 31 (Fig. 1) bestimmt wird. Ein Teil der vom Zielobjekt reflektierten Laserstrahlung gelangt über den gleichen Weg zurück, wird jedoch beim Durchtritt durch die λ/4-Platte 53 wiederum linear polarisiert, und zwar um 90° zur ursprünglichen Polarisationsrichtung. Diese gegenüber der auf die Brewster-Platte 52 auftreffenden Sendestrahlung 50a um 90° gedrehte linear polarisierte Strahlung tritt nunmehr durch die Brewster-Platte 52 hindurch und gelangt als Laserempfangsstrahlung 56 über den Weg, wie er oben näher beschrieben ist, d. h. über die optische Baugruppe 35, auf den Detektor. Wie die Figuren 18 und 19 noch zeigen, ist die gesamte Einkopplung des Lasersendestrahles in den abgetrennten Laserempfangskanal 55 zwischen dem Auskoppelelement 32 und dem optisch abbildenden System 60 der optischen Baugruppe 35 integriert.

Bei dem in den Fig. 18 und 19 dargestellten Ausführungsbeispiel ist die Brewster-Platte 52 so angeordnet, daß die Lasersendestrahlung 50a an der Brewster-Platte reflektiert und sodann in den abgetrennten Laserempfangskanal 55 eingekoppelt ist, während die Laserempfangsstrahlung 56 durch die Brewster-Platte hindurch in die optische Baugruppe 35 tritt. Es ist aber auch möglich, bei gegenüber dem dargestellten Ausführungsbeispiel nach den Fig. 18 und 19 um 90° gedrehter Polarisationsrichtung der Lasersendestrahlung die Kanäle in der Weise zu vertauschen, daß die vom Lasersender kommende Lasersendestrahlung durch die Brewster-Platte hindurchtretend in den abgetrennten Laserempfangskanal 55 eingekoppelt wird, während die Laserempfangsstrahlung an der Brewster-Platte reflektiert und in die optische Baugruppe 35 gelenkt wird.

Ferner ist es auch möglich, anstelle von Einzelelementen das optische Element 54, das Auskoppelelement 32 und gegebenenfalls auch noch die λ/4-Platte 53 zu einem einzigen Element zusammenfassen bzw. zu einer mechanischen Einheit zu verbinden.

**Patentansprüche**

1. Optisches System zum Empfang von Wärmestrahlung und Laserstrahlung, mit
– einer Empfangsoptik (11, 14, 15), welche einen Scanspiegel (14) und eine hinter diesem angeordnete IR-Optik (15) aufweist,
– einem Lasersender (3) zur Aussendung von Laserimpulsen in einer zur optischen Achse (5) der Empfangsoptik parallelen Richtung (8),

– einer im Strahlengang hinter der IR-Optik angeordneten Detektoranordnung (16), die einen Photodetektor (20; 20a; 20b) für an einem Zielgegenstand reflektierte Laserimpulse (9) sowie eine Anzahl von Detektorelementen (19; 19a; 19b) für die von dem Zielgegenstand ausgehende Wärmestrahlung (13) umfaßt,

– einem Positionssensor (31) zur Synchronisation des Sendezeitpunktes der Laserimpulse mit einer Winkelstellung des Scanspiegels, bei der die Laserimpulse von der Empfangsoptik auf einen Bereich fokussiert werden, in dem sich keine Detektorelemente befinden, gekennzeichnet durch

– eine Lichtleitungseinrichtung (35, 35a–35f) zur Auskopplung von Licht aus dem von der Empfangsoptik zu dem Bereich führenden Strahlengang und zur Weiterleitung des ausgekoppelten Lichts an den außerhalb dieses Strahlengangs angeordneten Photodetektor (20; 20a; 20b).

2. Optisches System nach Anspruch 1, dadurch gekennzeichnet, daß die Detektoranordnung eine auf einem einzigen Träger (18) vorgesehene Detektorreihenanordnung (19) umfaßt, und daß der zum Empfang der Laserstrahlung dienende Photodetektor in einem Randbereich der Detektorreihenanordnung liegt.

3. Optisches System nach Anspruch 2, dadurch gekennzeichnet, daß der Photodetektor zum Empfang der Laserstrahlung von einem Detektorelement (20) der Reihenanordnung (19) selbst gebildet ist.

4. Optisches System nach Anspruch 2, dadurch gekennzeichnet, daß der Photodetektor zum Empfang der Laserstrahlung aus einem in der Verlängerung der Reihenanordnung (19a) liegenden, davon räumlich jedoch abgesetzten Zusatzdetektor (20a) besteht.

5. Optisches System nach Anspruch 1, dadurch gekennzeichnet, daß die Detektoranordnung zum Empfang der Wärmestrahlung eine auf einem einzigen Träger (18b) vorgesehene Detektorreihenanordnung (19b) aufweist und daß der Photodetektor zum Empfang der Laserstrahlung mindestens einen auf einer Linie quer zur Reihenanordnung auf demselben Träger (18b) liegenden zusätzlichen Detektor (20b) umfaßt.

6. Optisches System nach Anspruch 1, dadurch gekennzeichnet, daß die Detektoranordnung zum Empfang der Wärmestrahlung eine auf einem Träger (18) angeordnete Detektorreihenanordnung (19) aufweist, und daß der Photodetektor zum Empfang der Laserstrahlung auf einem separaten, von dem Träger der Reihenanordnung räumlich und körperlich getrennten Träger (41) angeordnet ist.

7. Optisches System nach einem der Ansprüche 1 bis 6, dadurch gekennzeichnet, daß die Lichtleitungseinrichtung (35; 35a; 35d; 35e; 35f) ein Auskoppelelement (32) enthält, das aus einem totalreflektierenden Umlenkelement besteht.

8. Optisches System nach Anspruch 7, dadurch gekennzeichnet, daß das Auskoppelelement aus einem Umlenkspiegel (34) besteht.

9. Optisches System nach Anspruch 7, dadurch gekennzeichnet, daß das Auskoppelelement aus einem Umlenkprisma (33) besteht.

10. Optisches System nach einem der Ansprüche 1–9, dadurch gekennzeichnet, daß die genannte Winkelstellung eine Umkehrposition des Scanspiegels (14) ist.

11. Optisches System nach einem der Ansprüche 1–10, dadurch gekennzeichnet, daß die Lichtleitungseinrichtung (35) mindestens ein optisch abbildendes System (37) enthält, welches das ausgekoppelte Licht auf den Photodetektor (20) fokussiert.

12. Optisches System nach Anspruch 11, dadurch gekennzeichnet, daß der Abbildungsmaßstab des optisch abbildenden Systems (37) derart gewählt ist, daß eine Anpassung des fokussierten Lichtflecks an die Größe des Photodetektors (20) erfolgt.

13. Optisches System nach Anspruch 10 oder 11, dadurch gekennzeichnet, daß die Lichtleitungseinrichtung (35) eine Lichtleitfaser (36) enthält.

14. Optisches System nach Anspruch 13, dadurch gekennzeichnet, daß die Lichtleitfaser (36) aus einer Gradientenfaser besteht.

15. Optisches System nach Anspruch 13 oder 14, dadurch gekennzeichnet, daß das optisch abbildende System integraler Bestandteil der Lichtleitfaser (45) ist.

16. Optisches System nach Anspruch 11 oder 12, dadurch gekennzeichnet, daß dem optisch abbildenden System (37) ein das ausgekoppelte Licht ablenkendes Umlenksystem (42) vorgeschaltet ist.

17. Optisches System nach Anspruch 13 oder 16, dadurch gekennzeichnet, daß der Lichtleitfaser (36) bzw. dem Umlenksystem (42) ein zweites optisch abbildendes System (44) vorgeschaltet ist.

18. Optisches System nach einem der Ansprüche 11–17, dadurch gekennzeichnet, daß das das ausgekoppelte Licht auf den Photodetektor (20) fokussierende optisch abbildende System (37) aus einem Linsensystem (38) und einem Umlenkelement (39) besteht.

19. Optisches System nach einem der vorhergehenden Ansprüche, dadurch gekennzeichnet, daß das letzte Glied der Lichtleitungseinrichtung (35f) aus einem Umlenkelement in Form eines für Wärmestrahlung durchlässigen Einkoppelelementes (50) besteht, welches unmittelbar vor der zum Empfang der Wärme- und der Laserstrahlung dienenden, aus einer Reihenanordnung (19) bestehenden Detektoranordnung angeordnet und in dem vor dem Photodetektor (20) liegenden Abschnitt mit einer die Laserstrahlung in Richtung auf diesen Detektor reflektierenden Spektralteilerschicht (51) ausgebildet ist.

20. Optisches System nach einem der vorhergehenden Ansprüche, dadurch gekennzeichnet, daß die Lichtleitungseinrichtung (35) eine Polarisationsweiche (52, 53) enthält, über die einerseits die polarisierten Laserimpulse des Lasersenders (3) von der Rückseite in die Empfangsoptik (11, 14, 15) eingekoppelt und von dieser zum Zielgegenstand ausgesendet werden und über die andererseits das ausgekoppelte Licht dem Photodetektor (20; 20a; 20b) zugeführt wird, und daß zwischen der Polarisationsweiche und der Empfangsoptik ein optisches Element (54) angeordnet ist, das zusammen mit der IR-Optik (15) ein Teleskop bildet.

21. Optisches System nach Anspruch 20, dadurch gekennzeichnet, daß die Polarisationsweiche aus einem polarisationsselektiven Element (52) und einer in Abstrahlrichtung der eingekoppelten Laserimpulse auf dieses Element folgenden λ/4-Platte (53) besteht.

22. Optisches System nach Anspruch 21, dadurch gekennzeichnet, daß das polarisationsselektive Element (52) eine Brewster-Platte ist.

23. Optisches System nach Anspruch 22, dadurch gekennzeichnet, daß die Brewster-Platte (52) so angeordnet ist, daß die Laserimpulse durch Reflexion an der Brewster-Platte in die Empfangsoptik eingekoppelt werden und das ausgekoppelte Licht durch die Brewster-Platte hindurchtritt.

24. Optisches System nach Anspruch 22, dadurch gekennzeichnet, daß die Laserimpulse durch die Brewster-Platte hindurchtreten, und daß das ausgekoppelte Licht durch Reflexion an der Brewster-Platte zum Photodetektor gelenkt wird.

25. Optisches System nach einem der Ansprüche 20–24, dadurch gekennzeichnet, daß das optische Element (54) aus einer zwischen der Polarisationsweiche (52, 53) und der IR-Optik (15) angeordneten Streulinse besteht.

26. Optisches System nach einem der Ansprüche 20–25, dadurch gekennzeichnet, daß das optische Element (54) und das Auskoppelelement (32) aus einem Bauelement bestehen.

27. Optisches System nach einem der Ansprüche 21–26, dadurch gekennzeichnet, daß das Auskoppelelement (32), das optische Element (54) und die λ/4-Platte (53) zu einer mechanischen Einheit verbunden sind.

28. Optisches System nach einem der Ansprüche 20–27, dadurch gekennzeichnet, daß zwischen der Polarisationsweiche und dem Lasersender ein Ablenkelement (51a) vorgesehen ist.

## Claims

1. Optical system for the reception of thermal radiation and laser radiation, having
- a receiving optics (11, 14, 15), which has a scanning mirror (14) and an IR optics (15) arranged behind the latter,
- a laser transmitter (3) for the emission of laser pulses in a direction (8) parallel to the optical axis (5) of the receiving optics,
- a detector arrangement (16), which is arranged in the radiation path behind the IR optics and comprises a photodetector (20; 20a; 20b) for laser pulses (9) reflected at a target object and a number of detector elements (19; 19a; 19b) for the thermal radiation (13) emanating from the target object,
- a position sensor (31) for synchronisation of the instant of transmission of the laser pulses with an angular position of the scanning mirror, involving the laser pulses being focused by the receiving optics onto an area in which there are no detector elements,

characterized by
- a light conducting device (35, 35a–35f) for coupling out light from the radiation path leading from the receiving optics to the area and for passing on the coupled-out light to the photodetector (20; 20a; 20b) arranged outside this radiation path.

2. Optical system according to Claim 1, characterized in that the detector arrangement comprises a detector series arrangement (19), provided on a single carrier (18), and in that the photodetector serving to receive the laser radiation lies in a marginal area of the detector series arrangement.

3. Optical system according to Claim 2, characterized in that the photodetector for receiving the laser radiation is formed by a detector element (20) of the series arrangement (19) itself.

4. Optical system according to Claim 2, characterized in that the photodetector for receiving the laser radiation consists of an additional detector (20a) lying in the extension of the series arrangement (19a) but spatially removed from it.

5. Optical system according to Claim 1, characterized in that the detector arrangement for receiving the thermal radiation has a detector series arrangement (19b), provided on a single carrier (18b), and in that the photodetector for receiving the laser radiation comprises at least one additional detector (20b), lying on a line transverse to the series arrangement on the same carrier (18b).

6. Optical system according to Claim 1, characterized in that the detector arrangement for receiving the thermal radiation has a detector series arrangement (19), arranged on a carrier (18), and in that the photodetector for receiving the laser radiation is arranged on a separate carrier (41), spatially and physically separated from the carrier of the series arrangement.

7. Optical system according to one of Claims 1 to 6, characterized in that the light-conducting device (35; 35a; 35d; 35e; 35f) includes a coupling-out element (32), which consists of a totally reflecting deflection element.

8. Optical system according to Claim 7, characterized in that the coupling-out element consists of a deflection mirror (34).

9. Optical system according to Claim 7, characterized in that the coupling-out element consists of a deflection prism (33).

10. Optical system according to one of Claims 1–9, characterized in that the said angular position is a deflecting position of the scanning mirror (14).

11. Optical system according to one of Claims 1–10, characterized in that the light-conducting device (35) includes at least one optically imaging system (37), which focuses the coupled-out light onto the photodetector (20).

12. Optical system according to Claim 11, characterized in that the imaging scale of the optically imaging system (37) is chosen in such a way that an adaptation of the focused light spot to the size of the photodetector (20) takes place.

13. Optical system according to Claim 10 or 11, characterized in that the light-conducting device (35) includes a light-conducting fibre (36).

14. Optical system according to Claim 13, characterized in that the light-conducting fibre (36) consists of a graded-index fibre.

15. Optical system according to Claim 13 or 14, characterized in that the optically imaging system is an integral part of the light-conducting fibre (45).

16. Optical system according to Claim 11 or 12, characterized in that the optically imaging system (37) has a deflection system (42), diverting the coupled-out light, connected in front of it.

17. Optical system according to Claim 13 or 15, characterized in that the light-conducting fibre (36) or the deflection system (42) has a second optically imaging system (44) connected in front of it.

18. Optical system according to one of Claims 11–17, characterized in that the optically imaging system (37) focusing the coupled-out light onto the photodetector (20) consists of a lens system (38) and a deflection element (39).

19. Optical system according to one of the preceding claims, characterized in that the final element of the light-conducting device (35f) consists of a deflection element in the form of a coupling-in element (50), which is transparent to thermal radiation, is arranged directly in front of the detector arrangement, consisting of a series arrangement (19) and serving to receive the thermal and laser radiation, and is designed in the section lying in front of the photodetector (20) with a spectral divider layer (51), reflecting the laser radiation in the direction of this detector.

20. Optical system according to one of the preceding claims, characterized in that the light-conducting device (35) includes a polarization diplexer (52, 53), via which on the one hand the polarized laser pulses of the laser transmitter (3) are coupled into the receiving optics (11, 14, 15) from the rear and are emitted from the said optics to the target object and via which on the other hand the coupled-out light is fed to the photodetector (20; 20a; 20b), and in that, between the polarization diplexer and the receiving optics, there is arranged an optical element (54), which together with the IR optics (15) forms a telescope.

21. Optical system according to Claim 20, characterized in that the polarization diplexer consists of a polarization-selective element (52) and a $\lambda/4$ plate (53), following the said element in radiating direction of the coupled-in laser pulses.

22. Optical system according to Claim 21, characterized in that the polarization-selective element (52) is a Brewster plate.

23. Optical system according to Claim 22, characterized in that the Brewster plate (52) is arranged such that the laser pulses are coupled into the receiving optics by reflection at the Brewster plate and the coupled-out light passes through the Brewster plate.

24. Optical system according to Claim 22, characterized in that the laser pulses pass through the Brewster plate and in that the coupled-out light is deflected to the photodetector by reflection at the Brewster plate.

25. Optical system according to one of Claims 20–24, characterized in that the optical element (54) consists of a scattering lens arranged between the polarization diplexer (52, 53) and the IR optics (15).

26. Optical system according to one of Claims 20–25, characterized in that the optical element (54) and the coupling-out element (32) consist of one component.

27. Optical system according to one of Claims 21–26, characterized in that the coupling-out element (32), the optical element (54) and the $\lambda/4$ plate (53) are connected to form one mechanical unit.

28. Optical system according to one of Claims 20–27, characterized in that a diversion element (51a) is provided between the polarization diplexer and the laser transmitter.

**Revendications**

1. Système optique pour la réception d'un rayonnement thermique et d'un rayonnement laser, comportant
   - un système optique de réception (11, 14, 15), qui possède un miroir de balayage (14) et un système optique à infrarouge (15) disposé en arrière de ce miroir,
   - un émetteur laser (3) servant à émettre des impulsions laser dans une direction (8) parallèle à l'axe optique (5) du système optique de réception,
   - un dispositif de détection (16), qui est disposé en aval du système optique à infrarouge sur le trajet du rayonnement et comporte un photodétecteur (20; 20a; 20b) pour des impulsions laser (9) réfléchies sur un objet-cible, ainsi qu'un certain nombre d'éléments détecteurs (19; 19a; 19b) pour le rayonnement thermique (13) émanant de l'objet-cible,
   - un détecteur de position (31) servant à synchroniser l'instant d'émission des impulsions laser sur une position angulaire du miroir de balayage, les impulsions laser étant focalisées par le système optique de réception dans une zone, dans laquelle n'est disposé aucun élément détecteur,

caractérisé par
   - un dispositif (35, 35a–35f) de guidage de la lumière servant à extraire par découplage la lumière hors du trajet du rayonnement s'étendant du système optique de réception à la zone et à retransmettre la lumière extraite par découplage au photodétecteur (20; 20a; 20b) disposé à l'extérieur de ce trajet du rayonnement.

2. Système optique suivant la revendication 1, caractérisé par le fait que le dispositif de détection comporte un dispositif (19) formé d'une rangée de détecteurs et prévu sur un support unique (18), et que le photodétecteur utilisé pour la réception du rayonnement laser est situé dans une zone marginale du dispositif formé par la rangée de détecteurs.

3. Système optique suivant la revendication 2, caractérisé par le fait que le photodétecteur servant à recevoir le rayonnement laser est formé par un élément détecteur (20) du dispositif (19) lui-même.

4. Système optique suivant la revendication 2, caractérisé par le fait que le photodétecteur servant à recevoir le rayonnement laser est constitué par un détecteur supplémentaire (20a) situé dans le prolongement du dispositif (19a) formé par la rangée de détecteurs, mais en étant décalé dans l'espace par rapport à ce dispositif.

5. Système optique suivant la revendication 1, caractérisé par le fait que le dispositif de détection servant à recevoir le rayonnement thermique comporte un dispositif (19b) formé par une rangée de détecteurs et prévu sur un support unique (18b) et que le photodétecteur servant à recevoir le rayonnement laser comporte au moins un détecteur supplémentaire (20b) situé sur une ligne transversale par rapport au dispositif formé par la rangée de détecteurs, sur le même support (18b).

6. Système optique suivant la revendication 1, caractérisé par le fait que le dispositif de détection servant à recevoir le rayonnement thermique comporte un dispositif (19) formé d'une rangée de détecteurs et disposé sur un support (18), et que le photodétecteur servant à recevoir le rayonnement laser est disposé sur un support à part (41), séparé, du point de vue spatial et physique, du support du dispositif formé par la rangée de détecteurs.

7. Système optique suivant l'une des revendications 1 à 6, caractérisé par le fait que le dispositif (35; 35a; 35d; 35e; 35f) de guidage de la lumière contient un élément de découplage (32) constitué par un élément déviateur à réflexion totale.

8. Système optique suivant la revendication 7, caractérisé par le fait que l'élément de découplage est constitué par un miroir de déviation (34).

9. Système optique suivant la revendication 7, caractérisé par le fait que l'élément de découplage est constitué par un prisme déviateur (33).

10. Système optique suivant l'une des revendications 1–9, caractérisé par le fait que ladite position angulaire est une position d'inversion du miroir de balayage (14).

11. Système optique suivant l'une des revendications 1–10, caractérisé par le fait que le dispositif (35) de guidage de la lumière contient au moins un système optique (37) de formation d'images, qui focalise la lumière extraite par découplage sur le photodétecteur (20).

12. Système optique suivant la revendication 11, caractérisé par le fait que l'échelle de formation d'images du système optique (37) de formation d'images est choisie de manière à fournir une adaptation du spot lumineux focalisé à la taille du photodétecteur (20).

13. Système optique suivant la revendication 10 ou 11, caractérisé par le fait que le dispositif (35) de guidage de la lumière contient une fibre optique (36).

14. Système optique suivant la revendication 13, caractérisé par le fait que la fibre optique (36) est constituée par une fibre à gradient.

15. Système optique suivant la revendication 13 ou 14, caractérisé par le fait que le système optique de formation d'images fait partie intégrante de la fibre optique (45).

16. Système optique suivant la revendication 11 ou 12, caractérisé par le fait qu'un système déviateur (42), qui dévie la lumière extraite par découplage, est disposé en amont du système optique (37) de formation d'images.

17. Système optique suivant la revendication 13 ou 16, caractérisé par le fait qu'un second système optique (44) de formation d'images est disposé en amont de la fibre optique (36) ou du système déviateur (42).

18. Système optique suivant l'une des revendications 11–17, caractérisé par le fait que le système optique (37) de formation d'images, qui focalise la lumière extraite par découplage sur le photodétecteur (20), est constitué par un système de lentilles (38) ou un élément déviateur (39).

19. Système optique suivant l'une des revendications précédentes, caractérisé par le fait que le dernier élément du dispositif (35f) de guidage de la lumière est constitué par un élément déviateur réalisé sous la forme d'un élément de couplage (50), qui laisse passer le rayonnement thermique, est disposé directement en amont du dispositif de détection utilisé pour recevoir le rayonnement thermique et le rayonnement laser et constitué par un dispositif (19) formé d'une série de détecteurs, et comporte, dans la section située en amont du photodétecteur (20), une couche de division spectrale (51), qui réfléchit le rayonnement laser en direction de ce détecteur.

20. Système optique suivant l'une des revendications précédentes, caractérisé par le fait que le dispositif (35) de guidage de la lumière contient un aiguillage de polarisation (52, 53), au moyen duquel, d'une part, les impulsions laser polarisées de l'émetteur laser (3) sont injectées par couplage dans le système optique de réception (11, 14, 15) à partir de la face arrière et sont émises par ce système optique en direction de l'objet-cible, et au moyen duquel, d'autre part, la lumière extraite par découplage est envoyée au photodétecteur (20; 20a; 20b), et qu'entre l'aiguillage de polarisation et le système optique de réception se trouve disposé un élément optique (54), qui forme, conjointement avec le système optique à infrarouge (15), une lunette.

21. Système optique suivant la revendication 20, caractérisé par le fait que l'aiguillage de polarisation est constitué par un élément (52) sélectif du point de vue de la polarisation et par une plaque λ/4 (53) disposée à la suite de cet élément dans la direction d'émission des impulsions laser injectées par couplage.

22. Système optique suivant la revendication 21, caractérisé par le fait que l'élément (52) sélectif du point de vue de la polarisation est une plaque de Brewster.

23. Système optique suivant la revendication 22, caractérisé par le fait que la plaque de Brewster (52) est disposée de telle sorte que les impulsions laser sont injectées par couplage dans le système optique de réception, par réflexion sur la plaque de Brewster, et que la lumière extraite par découplage traverse la plaque de Brewster.

24. Système optique suivant la revendication 22, caractérisé par le fait que les impulsions laser traversent la plaque de Brewster et que la lumière extraite par découplage est déviée, par réflexion sur la plaque de Brewster, en direction du photodétecteur.

25. Système optique suivant l'une des revendications 20–24, caractérisé par le fait que l'élément optique (54) est constitué par une lentille divergente disposée entre l'aiguillage de polarisation (52, 53) et le système optique à infrarouge (15).

26. Système optique suivant l'une des revendications 20–25, caractérisé par le fait que l'élément optique (54) et l'élément de découplage (32) sont constitués par un composant.

27. Système optique suivant l'une des revendications 21–26, caractérisé par le fait que l'élément de découplage (32), l'élément optique (54) et la plaque λ/4 (53) sont réunis pour former une unité mécanique.

28. Système optique suivant l'une des revendications 20–27, caractérisé par le fait qu'un élément déviateur (51a) est prévu entre l'aiguillage de polarisation et l'émetteur laser.

# FIG 1

# FIG 2

# FIG 3

# FIG 4

FIG 5

FIG 8

FIG 6

FIG 9

FIG 7

FIG 10

# FIG 11

35f

51

9a

48 46 49 33 50

16

# FIG 12

46 35f

47

33

18

48

49 20 51 19 50

16

# FIG 13

20a

19a

16a 18a

# FIG 14

20b

19b

16b 18b

## FIG 15

## FIG 16

## FIG 17

# FIG 18

# FIG 19